(19) **Europäisches Patentamt European Patent Office Office européen des brevets**

(11) **EP 3 224 978 B1**

(12) **FASCICULE DE BREVET EUROPEEN**

(45) Date de publication et mention de la délivrance du brevet:
**02.01.2019 Bulletin 2019/01**

(21) Numéro de dépôt: **15808769.2**

(22) Date de dépôt: **30.11.2015**

(51) Int Cl.:
**H04L 1/00** *(2006.01)*   **H04B 7/155** *(2006.01)*

(86) Numéro de dépôt international:
**PCT/FR2015/053262**

(87) Numéro de publication internationale:
**WO 2016/083764 (02.06.2016 Gazette 2016/22)**

(54) **PROCÉDÉ ET DISPOSITIF DE RELAYAGE SOUPLE ET SÉLECTIF SSDF**

VERFAHREN UND VORRICHTUNG FÜR FLEXIBLE, SELEKTIVE SSDF-WEITERLEITUNG

METHOD AND DEVICE FOR FLEXIBLE, SELECTIVE SSDF RELAYING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2014 FR 1461661**

(43) Date de publication de la demande:
**04.10.2017 Bulletin 2017/40**

(73) Titulaire: **Orange**
**75015 Paris (FR)**

(72) Inventeurs:
• **VISOZ, Raphaël**
**92170 Vanves (FR)**
• **MOHAMAD, Abdulaziz**
**91190 Gif Sur Yvette (FR)**
• **BERTHET, Antoine**
**92290 Chatenay Malabry (FR)**

(56) Documents cités:
**WO-A1-2010/092437   WO-A1-2011/116831**
**WO-A1-2012/022905   WO-A1-2013/093359**
**WO-A1-2013/093361**

• **ATOOSA HATEFI ET AL: "Full Diversity Distributed Coding for the Multiple Access Half-Duplex Relay Channel", NETWORK CODING (NETCOD), 2011 INTERNATIONAL SYMPOSIUM ON, IEEE, 25 juillet 2011 (2011-07-25), pages 1-6, XP031928315, DOI: 10.1109/ISNETCOD.2011.5979061 ISBN: 978-1-61284-138-0**
• **YAN-XIU ZHENG ET AL: "A Turbo Coding System for High Speed Communications", IEEE TRANSACTIONS ON WIRELESS COMMUNICATIONS, IEEE SERVICE CENTER, PISCATAWAY, NJ, US, vol. 6, no. 10, 1 octobre 2007 (2007-10-01), pages 3700-3711, XP011194416, ISSN: 1536-1276, DOI: 10.1109/TWC.2007.060086**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

La présente invention se rapporte au domaine des télécommunications. Au sein de ce domaine, l'invention se rapporte plus particulièrement à la transmission de données codées entre une source et une destination avec relayage par un relais. Le système de transmission comporte ainsi au moins trois noeuds. L'invention concerne tout aussi bien les systèmes à plusieurs relais entre une source et une destination, que les systèmes à plusieurs sources, plusieurs relais et une ou plusieurs destinations et que les systèmes à une source, plusieurs relais et plusieurs destinations.

L'invention traite de codage de réseau. Elle concerne l'amélioration de la qualité de la transmission des données, et en particulier l'amélioration des performances du décodage correcteur d'erreurs au niveau de la destination en augmentant l'efficacité du relais.

L'invention s'applique notamment, mais non exclusivement, à la transmission de données via des réseaux mobiles, par exemple pour des applications temps réel, ou via par exemple des réseaux de capteurs.

### Art antérieur

Le volume des communications sans fil augmente rapidement depuis quelques années et il est prévu que cette progression se poursuive dans les années à venir. Pour faire face à cette explosion, les solutions consistent à densifier le réseau, à gérer l'interférence (antennes multiples) ou à ajouter du spectre.

La densification du réseau nécessite de déployer des infrastructures qui ont un coût très important. Compte tenu que les terminaux des utilisateurs (véhicules, smart phone, etc) embarquent de plus en plus de fonctionnalité, ils deviennent une alternative au déploiement d'éléments d'infrastructure lourds pour densifier le réseau. Par nature, les liaisons qui accompagnent cette densification sont sans fil et les transmissions qu'elles assurent dans leur rôle d'élément d'infrastructure sont en concurrence avec les communications assurées par le réseau puisqu'elles utilisent les mêmes ressources spectrales. Toutefois, l'utilisation des terminaux utilisateurs comme éléments de densification du réseau nécessite de traiter les interférences associées.

La technique de relayage avec sélection (SDF) est décrite par [1][2] dans le cas d'une structure basée sur un canal à accès multiples et à relais multiples (MAMRC) avec des liens semi-orthogonaux ou non-orthogonaux. Les communications mises en oeuvre par la structure MAMRC sont dites coopératives, plusieurs sources transmettent simultanément vers une destination avec l'aide d'un ou plusieurs relais. La technique décrite est combinée avec un codage de réseau à diversité pleine. Le protocole semi-orthogonal permet aux sources de transmettre simultanément en utilisant les mêmes utilisations du canal (channel use) pendant la phase d'écoute du relais et permet ensuite au relais de transmettre seul pendant une phase de silence des sources. Selon la technique de relayage avec sélection (SDF : Selective Decode and Forward), le relais essaie de décoder les messages des sources et prend une décision dure sur les messages correctement décodés sous la forme d'une vérification du CRC inséré dans les messages. Le relais fait suivre uniquement les messages correctement décodés vers la destination après un codage de réseau.

La décision dure peut être prise sur la base des valeurs souples (rapports de vraisemblance ou LLR (Log Likelihood Ratio). Lorsque plusieurs sources transmettent simultanément, le relais effectue une détection itérative conjointe multi utilisateurs (iterative multi user joint decoding). A la dernière itération, le détecteur associe des valeurs de LLR aux bits des messages des sources. La valeur de LLR associée à un bit b est le log du rapport entre la probabilité que ce bit b égal un et la probabilité que ce bit b égal zéro. La décision dure revient à tester le signe du LLR, s'il est positif la décision est que le bit b vaut un, s'il est négatif la décision est que le bit b vaut zéro. Il est à noter qu'une valeur de LLR peut être associée à un bit connu i.e. après décision dure : par définition le LLR d'un bit un a pour valeur +l'infini et le LLR d'un bit zéro a pour valeur -l'infini. En pratique, l'infini correspond à la valeur la plus élevée de quantification du LLR.

Le codage de réseau est une forme de coopération selon laquelle les noeuds du réseau partagent non seulement leurs ressources propres (puissance, bande, etc.) mais également leur capacité de calcul, pour créer un codage distribué de plus en plus puissant au fur et à mesure que l'information se propage à travers les noeuds. Il amène des gains substantiels en termes de diversité et de codage et donc de fiabilité de transmission.

[3] et [4] présentent d'autres arts antérieurs.

### Caractéristiques principales de l'invention

L'invention a pour objet un procédé de relayage de messages par un relais qui apporte un gain supplémentaire par rapport aux procédés connus de relayage avec sélection. Le relais est destiné à un système de télécommunication à M sources, L relais et D destinations, les transmissions entre les sources, les relais et les destinations se font via un canal de transmission. $M \geq 1$, $L \geq 1$, $D \geq 1$. Le procédé comprend :

- un décodage souple de mots de code émis par au moins une source pendant un premier nombre donné d'utilisations du canal pour obtenir des vecteurs de valeurs souples représentant les messages décodés,
- une détection d'erreur sur les vecteurs pour pouvoir séparer les messages estimés sans erreur des messages estimés avec erreur,
- un test de fiabilité portant uniquement sur les vecteurs des messages estimés avec erreur pour pouvoir séparer les messages fiables des messages non fiables,
- une mise en forme comprenant un entrelacement canal et une modulation prenant uniquement en compte les messages estimés sans erreur et les messages estimés avec erreur et fiables, cette mise en forme portant sur les valeurs souples des messages si au moins un message estimé avec erreur passe avec succès le test de fiabilité,
- une émission pendant un deuxième nombre donné d'utilisations du canal d'un signal représentatif des messages pris en compte par la mise en forme.

Le procédé de relayage SSDF (Soft Selective Decode and Forward) selon l'invention s'utilise aussi bien dans un contexte de liens orthogonaux que de liens semi orthogonaux ou non orthogonaux entre les sources, les relais et les destinations. Par exemple, dans le contexte d'un système basé sur une architecture « Two way Relay Channel », les utilisations du canal sont décomposées temporellement en deux phases : celle correspondant à la transmission des sources et celle correspondant à la transmission du relais. Lorsque les liens sont non orthogonaux les sources et les relais transmettent simultanément sur une même ressource spectrale, lorsque les liens sont orthogonaux les sources et les relais se partagent les utilisations du canal durant leur phase de transmission respective, lorsque les liens sont semi-orthogonaux soit les sources transmettent simultanément sur une même ressource spectrale soit les relais transmettent simultanément sur une même ressource spectrale. Soit Cu le nombre d'utilisations du canal (channel use ou granularité temps-fréquence) à répartir entre les M sources. Si le protocole est orthogonal chaque source utilise Cu/M utilisations du canal, si le protocole est non-orthogonal ou semi-orthogonal chaque source utilise les Cu utilisations du canal. En ce qui concerne chaque relais, il détecte et décode de manière souple les mots de code émis par une source ou émis respectivement par M sources pendant les Cu ou Cu/M utilisations du canal. Il effectue une détection d'erreur sur les vecteurs de valeurs souples représentant les messages décodés ce qui permet de séparer les messages estimés sans erreur des messages estimés avec erreur. Il effectue un test de fiabilité uniquement sur les vecteurs des messages estimés avec erreur pour pouvoir séparer les messages fiables des messages non fiables. Ce test porte sur les messages dans leur forme avant détection d'erreur, c'est-à-dire sous leur forme après décodage souple. Lorsqu'il y a au moins un message estimé avec erreur et fiable, la mise en forme s'effectue sous une forme souple, c'est-à-dire qu'elle porte sur les valeurs souples des messages. Le relais transmet le signal après modulation. Selon des mécanismes classiques, un signal de signalisation indique à la destination quels sont les messages pris en compte dans la mise en forme.

Le test de fiabilité sur les vecteurs des messages décodés avec erreur permet d'écarter les messages qui sont trop erronés et de ne conserver que les autres. Il faut donc comprendre que quand un message est dit fiable sans autre précision, il est sous-entendu qu'il est estimé avec erreur et a passé le test de fiabilité. Les valeurs souples des messages fiables apportent une information pertinente qui peut en effet aider efficacement la destination à décoder correctement les sources même si l'intégrité du message n'a pas été conservée lors de la transmission par le canal.

Ainsi, la destination peut bénéficier d'un gain de codage réseau même en l'absence de message décodé sans erreur au relais. Le relayage selon l'invention augmente ainsi la probabilité de succès de décodage de la destination tout en garantissant une certaine fiabilité des transmissions entre les sources et la destination et tout en minimisant la propagation d'erreurs des relais vers la destination. Un tel procédé est donc particulièrement adapté à un système déployé en milieu urbain dans lequel le canal de transmission a généralement un profil à évanouissements dit de Rayleigh. En effet, de tels évanouissements perturbent le signal transmis et se traduisent par une probabilité non nulle de détection erronée (probabilité dite de coupure ou d'« outage » selon la terminologie anglosaxonne). Un procédé de relayage sélectif avancé selon l'invention permet avantageusement de limiter la propagation de messages reçus erronés tout en permettant la transmission d'une information lorsque le message erroné à une certaine fiabilité. Le procédé transmet donc à la destination une information supplémentaire par rapport aux systèmes connus qui améliore la probabilité de détection et de décodage de la destination plus particulièrement lorsque les liens sources-relais sont bruités. Contrairement à certains relais, un relais selon l'invention reste silencieux lorsqu'aucun message n'est sans erreur ou n'est fiable. Ceci évite ainsi la transmission de bruit qui augmente les interférences à la destination. Cette augmentation d'interférences est plus particulièrement dommageable pour la destination lorsque les liens sources-relais et relais-destinations sont non-orthogonaux.

Selon un mode de réalisation, le test de fiabilité consiste à comparer une estimation d'une probabilité d'erreur d'un message effectuée à partir du vecteur des valeurs souples, LLR, de ce message à une valeur seuil.

La valeur seuil est par exemple de 0.01. Ce seuil peut être fixé en fonction des conditions de propagation. Il peut avoir une valeur initiale déterminée à l'issue de simulations ou de mesures.

Selon un mode de réalisation, l'estimation de probabilité d'erreur est effectuée à partir de toutes les valeurs souples associées au message. Ce mode est adapté à un codage effectué par les sources qui n'est pas systématique.

Selon un mode de réalisation, les mots de code reçus par le relais ont été émis après un codage systématique par les sources et l'estimation de probabilité d'erreur est effectuée uniquement à partir des valeurs souples associées à une partie systématique du message.

Ce mode est adapté à un codage systématique effectué par les sources. En limitant l'estimation de la probabilité d'erreur à la partie systématique, le relais gagne en efficacité.

Selon un mode de réalisation, la mise en forme comprend en outre un codage de réseau binaire et un codage canal, le codage de réseau binaire consistant à additionner au moyen d'un ou exclusif dans le domaine binaire les messages estimés sans erreur puis entrelacés.

Ces codages sont adaptés aux messages estimés sans erreur par le relais. La valeur dure d'un message estimé sans erreur est obtenue en mettant à zéro les valeurs souples négatives et à un les valeurs souples positives de son vecteur LLR.

Selon un mode de réalisation, si aucun message n'est détecté sans erreur et si au moins un message détecté avec erreur est fiable alors la modulation est de type souple.

La modulation effectuée sous forme souple (soft mapping) détermine une valeur complexe qui n'est pas un point de la constellation mais une valeur moyenne pondérée des points de la constellation conditionnée aux LLR consécutifs relatifs aux bits constitutifs du message, cette technique est désignée sous les termes compression MMSUE.

Selon un mode de réalisation, la modulation de type souple mappe $Q > 2$ valeurs souples des bits constitutifs du message fiable sur un symbole complexe qui est une valeur moyenne pondérée des points de la constellation conditionnée à la valeur des Q valeurs souples.

La modulation consiste à mapper Q valeurs souples du message sur un symbole complexe déterminé comme la moyenne pondérée des symboles de la constellation conditionnée aux Q LLR des Q bits constitutifs du message.

Selon un mode de réalisation, l'entrelacement canal est effectué uniquement sur une sélection par poinçonnage des valeurs souples pour ajuster le rendement de codage et de modulation à la longueur du deuxième nombre donné d'utilisations du canal.

Selon un mode de réalisation, si aucun message n'est détecté sans erreur et si tous les messages détectés avec erreur sont fiables alors la mise en forme qui porte sur les valeurs souples des messages comprend un codage réseau souple des valeurs souples avant l'entrelacement canal et comprend une modulation souple.

Selon un mode de réalisation, le codage réseau souple est une addition effectuée uniquement sur une sélection des valeurs souples pour ajuster le rendement de codage et de modulation à la longueur du deuxième nombre donné d'utilisations du canal.

Selon un mode de réalisation, si au moins un message est détecté sans erreur et si au moins un message est détecté avec erreur et est fiable alors des valeurs souples positionnées aux valeurs extrêmes de quantification correspondant aux valeurs zéro et un sont associés aux messages détectés sans erreur et la mise en forme sous forme souple comprend un codage réseau souple des valeurs souples des messages avant l'entrelacement canal et comprend une modulation souple.

L'invention a en outre pour objet un relais destiné à un système de télécommunication à M sources, L relais et D destinations et destiné à mettre en oeuvre un procédé de relayage selon l'invention. Le relais comprend :

- un décodeur souple de mots de code émis par au moins une source pendant un premier nombre donné d'utilisations du canal pour obtenir des vecteurs de valeurs souples représentant les messages décodés,
- un détecteur d'erreur sur les vecteurs pour pouvoir séparer les messages estimés sans erreur des messages estimés avec erreur,
- un moyen de test de fiabilité portant uniquement sur les vecteurs des messages estimés avec erreur pour pouvoir séparer les messages fiables des messages non fiables,
- un moyen de mise en forme comprenant :
- un entrelaceur canal et un modulateur portant uniquement sur les messages estimés sans erreur et sur les messages estimés avec erreur et fiables, cette mise en forme portant sur les valeurs souples des messages si au moins un message estimé avec erreur passe avec succès le test de fiabilité,
- un émetteur pour émettre pendant un deuxième nombre donné d'utilisations du canal un signal représentatif des messages pris en compte par le moyen de mise en forme.

Selon un mode de réalisation, le moyen de mise en forme comprend en outre :

- des entrelaceurs pour entrelacer respectivement les messages estimés sans erreur,
- un codeur de réseau dans un corps de Galois des messages entrelacés suivi d'un entrelaceur et d'un codeur de canal.

Selon un mode de réalisation, le modulateur est de type souple et le moyen de mise en forme comprend en outre avant l'entrelaceur canal :

- un moyen pour sélectionner certaines des valeurs souples des messages estimés avec erreur et fiables,
- un codeur de réseau souple des valeurs souples sélectionnées.

Selon un mode de réalisation, le modulateur est de type souple et le moyen de mise en forme comprend en outre avant l'entrelaceur canal :

- un moyen pour sélectionner certaines des valeurs souples des messages estimés avec erreur et fiables,
- un entrelaceur des valeurs souples sélectionnées,
- un codeur de réseau souple des valeurs souples sélectionnées,

  - un entrelaceur réseau,
  - un codeur de canal souple.

L'invention a en outre pour objet un système à M sources, L relais et D destinations dans lequel les relais sont selon un objet de l'invention. Selon un mode particulier du système, les entrelaceurs réseau sont différents entre les relais.
L'invention est particulièrement adaptée à des relais half duplex mais peut tout aussi bien être mise en oeuvre avec des relais full duplex. Les systèmes coopératifs utilisant des relais half duplex sont très attractifs du fait de schémas de communication plus simples que pour des relais full duplex, d'une mise en oeuvre facile et d'un coût réduit.
Les différents modes de réalisation précédents peuvent être combinés ou pas avec un ou plusieurs de ces modes pour définir un autre mode de réalisation.
Selon une implémentation préférée, les étapes du procédé de relayage sont déterminées par les instructions d'un programme de relayage incorporé dans un ou plusieurs circuits électroniques tels des puces elle-même pouvant être disposées dans des dispositifs électroniques du relais. Le procédé de relayage selon l'invention peut tout aussi bien être mis en oeuvre lorsque ce programme est chargé dans un organe de calcul tel un processeur ou équivalent dont le fonctionnement est alors commandé par l'exécution du programme.
En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.
Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.
Alternativement, le support d'informations peut être un circuit intégré dans lequel le programme est incorporé, le circuit étant adapté pour exécuter ou pour être utilisé dans l'exécution du procédé en question.
D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.
L'invention a en outre pour objet un programme d'ordinateur sur un support d'informations, ledit programme comportant des instructions de programme adaptées à la mise en oeuvre d'un procédé de relayage selon l'invention, lorsque ledit programme est chargé et exécuté dans un relais destiné à un système à M sources, L relais et D destinations, le relais étant destiné à mettre en oeuvre le procédé de relayage.
L'invention a en outre pour objet un support d'informations comportant des instructions de programme adaptées à la mise en oeuvre d'un procédé de relayage selon l'invention, lorsque ledit programme est chargé et exécuté dans un relais destiné à un système à M sources, L relais et D destinations, le relais étant destiné à mettre en oeuvre le procédé de relayage.

**Liste des figures**

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma d'un système dit TWMRC (Two-Way Multiple Relay Channel) selon l'art antérieur,
- la figure 2 est un schéma d'un système dit MAMRC (Multiple Access Multiple Relay Channel) selon l'art antérieur,
- la figure 3 est un schéma d'un système dit BMRC (Broadcast Multiple Relay Channel) selon l'art antérieur,
- la figure 4 illustre un protocole semi-orthogonal tel que considéré dans la description détaillée de l'invention,
- la figure 5 est un schéma d'un exemple de réalisation d'un relais r selon l'invention,

- la figure 6 est un organigramme simplifié d'un procédé de relayage selon l'invention,
- la figure 7 représente un exemple de réalisation de la mise en forme $\Theta_{hard,i}(\mathbf{u}_i)$ effectuée par le module ETU,
- la figure 8 représente un exemple de réalisation de la mise en forme $\Theta_{hard,3}(\mathbf{u}_1,\mathbf{u}_2)$ effectuée par le module ETU,
- la figure 9 représente un exemple de réalisation de la mise en forme $\Theta_{soft,i}(\lambda_1)$ effectuée par le module ETU,
- la figure 10 représente un exemple de réalisation de la mise en forme $\Theta_{soft,3}(\lambda_1,\lambda_2)$ effectuée par le module ETU,
- la figure 11 représente un autre exemple de réalisation de la mise en forme $\Theta_{soft,i}(\lambda_1)$ effectuée par le module ETU,
- la figure 12 représente un autre exemple de réalisation de la mise en forme $\Theta_{soft,3}(\lambda_1,\lambda_2)$ effectuée par le module ETU,
- la figure 13 représente un exemple de réalisation de la mise en forme $\Theta_{hard,3}(\mathbf{u}_1,\mathbf{u}_2)$ effectuée par le module ETU lorsque le relais est utilisé avec d'autres relais dans le système i.e. $L \geq 2$,
- la figure 14 représente un premier exemple de réalisation de la mise en forme $\Theta_{soft,3}(\lambda_1,\lambda_2)$ effectuée par le module ETU lorsque le relais est utilisé avec d'autres relais dans le système i.e. $L \geq 2$,
- la figure 15 représente un second exemple de réalisation de la mise en forme $\Theta_{soft,3}(\lambda_1,\lambda_2)$ effectuée par le module ETU lorsque le relais est utilisé avec d'autres relais dans le système i.e. $L \geq 2$.

## Description de modes de réalisation particuliers

Les notations suivantes sont utilisées dans la demande.

Tous les vecteurs utilisent des caractères gras. Un vecteur $\mathbf{v}$ a son kième élément noté $v_k$. $F_q$ est le corps de Galois à q éléments, $\mathbb{R}$ le corps des réels et $\mathbb{C}$ le corps des complexes.

Un relayage selon l'invention s'utilise dans des systèmes sans fil dans lesquels au moins deux messages indépendants sont transmis à l'aide d'au moins un relais vers leur destination. De manière générale, les sources, noeuds $s_i$, $i \in \{1,...,M\}$, diffusent leurs séquences d'informations codées à l'attention des relais $r_j$, $j \in \{1,...,L\}$ et des destinations $d_k$, $k \in \{1,...,D\}$. Chaque relais décode les signaux reçus issus des sources et ré-encode conjointement les messages issus du décodage en ajoutant une redondance propre créant un code de réseau.

Par exemple, l'invention peut être utilisée dans des systèmes dits TWMRC (Two-Way Multiple Relay Channel), dans des systèmes dits MAMRC (Multiple Access Multiple Relay Channel) ou dans des systèmes dits BMRC (Broadcast Multiple Relay Channel).

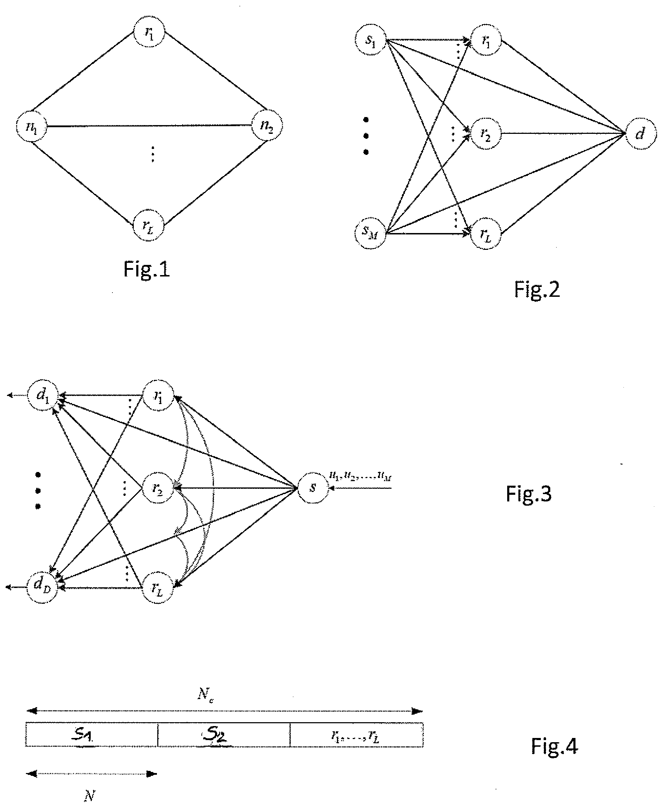

Les systèmes TWMRC illustrés par la figure 1 comprennent deux noeuds $s_1$, $s_2$ qui veulent se transmettre mutuellement leurs messages avec l'aide de L relais, $L \geq 1$. Généralement, il existe un lien direct entre les deux noeuds. Les relais sont utilisés pour accroître la fiabilité de la communication entre les deux noeuds. Toutefois, si les deux noeuds sont half-duplex et transmettent simultanément alors ils ne peuvent pas s'écouter mutuellement. Dans ce cas il n'y a pas de lien direct entre les deux noeuds $s_1$, $s_2$. Quel que soit le cas, les relais peuvent être selon l'invention et utilisés de manière efficace.

Les systèmes MAMRC illustrés par la figure 2 comprennent M sources $s_1$, ...$s_M$ qui veulent transmettre leurs messages vers une destination d commune à l'aide des relais $r_1,..,r_L$. Le modèle de canal peut être de type orthogonal, semi-orthogonal ou non-orthogonal. Les relais selon l'invention peuvent être utilisés pour accroître la fiabilité de la transmission quel que soit le type du canal.

Les systèmes BMRC illustrés par la figure 3 comprennent une source s qui veut transmettre $M \geq 2$ messages différents vers $D \leq M$ destinations différentes selon un mode dit Round Robin (à chaque intervalle de temps (time slot) un message est transmis) à l'aide de $L \geq 1$ relais. Les relais selon l'invention sont utilisés pour accroître la fiabilité de la transmission. Chaque relais peut avoir son propre intervalle de temps (système orthogonal) ou tous les relais peuvent transmettre simultanément (système non orthogonal). En ce qui concerne le codage de réseau, le principe est proche de celui d'un mode HARQ (Hybrid Automatic Repeat ReQuest) : le $n^{ième}$ message peut être codé réseau au relais avec les messages précédents.

La description détaillée de l'invention est effectuée ci-après en prenant l'exemple d'une utilisation dans un réseau TWMRC.

Les deux noeuds $s_1$, $s_2$ veulent échanger leur message

$$\mathbf{u}_1, \mathbf{u}_2 \in \mathbb{F}_2^K$$

de K bits chacun à l'aide de L relais $r \in \{r_1,...,r_L\}$. Pour l'exemple, les relais sont half-duplex (ils ne peuvent recevoir et transmettre simultanément).

Par souci de simplification de la description, le système considéré est semi-orthogonal : les transmissions des noeuds $s_1$ et $s_2$ n'interfèrent pas aux relais (orthogonalité en temps) mais les transmissions des relais sont simultanées sur la même bande et donc interfèrent aux niveaux des noeuds $s_1$ et $s_2$. Ici semi-orthogonal est employé en référence au système non orthogonal qui aurait considéré une transmission simultanée des noeuds $s_1$ et $s_2$ sur la même bande

Ce protocole semi-orthogonal est illustré par la figure 4. Pendant le 1$^{er}$ intervalle de temps, le noeud $s_1$ transmet, les relais et le noeud $s_2$ écoutent. Pendant le 2$^e$ intervalle de temps, le noeud $s_2$ transmet, les relais et le noeud $s_1$ écoutent. Pendant le 3$^e$ intervalle de temps, les relais transmettent simultanément, le noeud $s_1$ et le noeud $s_2$ écoutent. Chaque cycle de transmission est décomposé en $N_c$ utilisations du canal divisées également en trois intervalles temporels de transmission. Une utilisation de canal est la plus petite granularité en ressource temps-fréquence défini par le système qui permet la transmission d'un symbole modulé. Le nombre d'utilisations de canal est lié à la bande de fréquence disponible et la durée de transmission.

Par souci de simplification de la description, on considère :

- qu'un seul relais est utilisé, L=1, que les noeuds et le relais sont synchronisés et équipés d'une seule antenne d'émission,
- que les messages des noeuds sont indépendants (il n'y a pas de corrélation entre eux),
- que les liens entre les noeuds sont entachés de bruit (additive noise) et d'évanouissements (fading gain (fast, slow)). Dans le cas « slow fading » privilégié dans la description, les gains d'évanouissement sont constants pendant les Nc utilisations du canal où Nc est le nombre d'utilisations de canal pour accomplir un cycle de transmission,
- que tous les intervalles de temps alloués aux différents noeuds sont de même taille en termes de nombre d'utilisations de canal, Nc =3N. Chaque intervalle de transmission temporel contient N utilisations de canal.

Le système semi-orthogonal considéré devient en présence d'un unique relais une variante orthogonale. Les messages sont émis par les noeuds qui sont typiquement des terminaux d'utilisateurs qui cherchent à joindre une même station de base en s'aidant d'un relais.

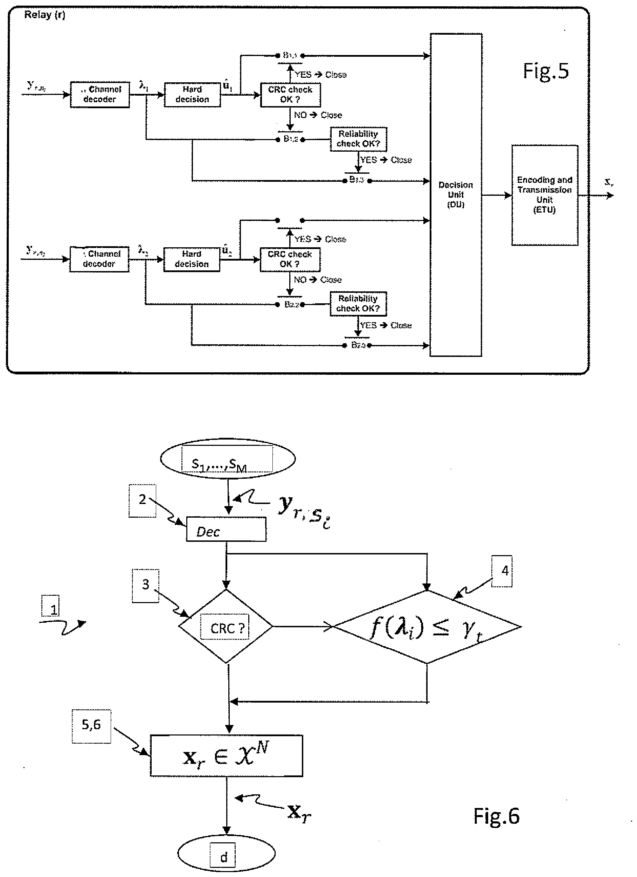

Un relais r selon l'invention est décrit en prenant un exemple de réalisation illustré par la figure 5. Le procédé 1 selon l'invention est illustré par la figure 6.

On considère $u_i \in F_2^K$ $i \in \{1,2\}$ le message de données de la source $s_i$, c'est un message de longueur $K$ dont les composantes prennent leurs valeurs dans le corps de Galois $F_2^K$ fini d'ordre 2 entier. $u_i$ est considéré comme comprenant une redondance cyclique ou CRC (Code Redundancy Check) qui permet de vérifier l'intégrité du message.

Le message $u_i$ est converti par un codeur canal en un mot de code de $P_s$ bits noté $c_i \in F_2^{P_s}$. Les sources peuvent utiliser n'importe quel codage canal. Sans perte de généralité, on considère que le codage canal utilisé par une source est systématique i.e. le mot de code $c_i$ comprend dans sa première partie le message et on considère qu'entre les sources la même longueur $P_s$ de codage est utilisée. Le mot de code $c_i$ est entrelacé, l'entrelaceur est différent entre les noeuds et noté $\pi_i$. Le mot de code entrelacé $b_i$ alimente un modulateur sans mémoire pour obtenir un mot de code complexe $\mathbf{x}_i \in \mathcal{X}^N$ tel que $\mathcal{X} \subset \mathbb{C}$ dénote une constellation complexe de cardinalité $|\mathcal{X}| = 2^q$. Il est à noter que les symboles ainsi obtenus sont ensuite associées à une utilisation de canal en prenant en compte la puissance de transmission disponible au relais (partie multiplexage, IFFT, démultiplexage, insertion du cyclique préfixe, filtrage et partie radio Fréquence dans le cas OFDM).

Le relais r selon l'invention reçoit, en bande de base, durant l'intervalle de temps alloué au noeud $s_i$, $i \in \{1,2\}$ :

$$y_{r,s_i} = h_{r,s_i} x_{s_i} + w_{r,s_i} \qquad (1)$$

ou

$$y_{r,s_i,n} = h_{r,s_i} x_{s_i,n} + w_{r,s_i,n} \quad \forall n = 1, \dots, N \qquad (2)$$

expressions dans lesquelles $h_{r,s_i} \in \mathbb{C}$ représente le gain de canal entre le noeud $s_i$ et le relais $r$ et dans lesquelles $\mathbf{w}_{r,s_i} \in \mathbb{C}^N$ est un vecteur de bruit additif.

Le relais r effectue une détection 1 sur le signal reçu $y_{r,s_i}$. Lorsque les sources émettent en utilisant les mêmes utilisations du canal (cas système non-orthogonal), la détection est conjointe pour séparer les messages respectivement des sources en utilisant un détecteur conjoint multi utilisateurs ou MUD éventuellement itératif.

Le relais *r* décode 2 avec un décodeur de canal souple *dec* chacun des messages à la fin de l'intervalle de temps alloué à une source. Pour chaque mot de code, le décodeur de canal génère un vecteur de valeurs souples ou LLR noté $\boldsymbol{\lambda}_i \in \mathbb{R}^{P_s}$ représentant le message décodé.

Le relais *r* effectue une détection 3 d'erreur sur les vecteurs $\lambda_1$, $\lambda_2$ pour pouvoir séparer les messages estimés sans erreur des messages estimés avec erreur.

Cette détection d'erreur est effectuée selon un mode de réalisation après décision dure sur la valeur des bits. Lorsque le codage canal à la source est de type systématique, la première partie du mot de code comprend généralement la partie systématique. Cette première partie est utilisée pour prendre une décision dure de la valeur des bits (0 ou 1) du message pour obtenir un message estimé $\hat{\mathbf{u}}_i$ sous une forme dure :

$$\hat{u}_{i,l} = \begin{cases} 1 & si & |\lambda_{i,l}| > 0 \\ 0 & si & |\lambda_{i,l}| \le 0 \end{cases} \quad \forall l = 1, \dots, K \qquad (3)$$

Ce mode est particulièrement simple à mettre en oeuvre et plus particulièrement lorsque le message de la source comprend une information d'intégrité telle un CRC. La détection d'erreur consiste alors à vérifier l'intégrité de chaque message en comparant la valeur du CRC avec le contenu du message après décision dure.

Les messages estimés sans erreur sont considérés tels que $\hat{\mathbf{u}}_i = \boldsymbol{u}_i$. Ces messages sont transmis à un module de décision DU, selon l'illustration du relais figure 5 l'interrupteur B$_{i,1}$ est fermé.

Les messages estimés avec erreur sont tels que $\hat{\mathbf{u}}_i \ne \boldsymbol{u}_i$, ils ne sont pas transmis au module de décision DU. Selon l'illustration du relais figure 5 l'interrupteur B$_{i,1}$ reste ouvert et l'interrupteur B$_{i,2}$ est fermé.

Ces messages estimés avec erreur pris dans leur forme avant détection d'erreur, i.e. dans leur forme souple, passent 4 un test de fiabilité ; le test porte donc sur les vecteurs $\lambda_i$ de LLR. Ce test permet de séparer les messages fiables des messages non fiables. Ce test de fiabilité met en oeuvre une fonction de fiabilité *f* appliquée sur le vecteur de LLR. La valeur obtenue est comparée à un seuil $\gamma_t \in \mathbb{R}$.

Selon un premier mode de réalisation, la fonction *f* estime la probabilité d'erreur bit du mot de code $\boldsymbol{c}_i$ :

$$f: \mathbb{R}^{P_s} \to \mathbb{R}: \quad f(\boldsymbol{\lambda}_i) = \frac{1}{P_s} \sum_{l=1}^{P_s} \frac{1}{1 + \exp(|\lambda_{i,l}|)} \qquad (4)$$

Selon un deuxième mode de réalisation, la fonction *f* estime la probabilité d'erreur bit du mot de code $\boldsymbol{c}_i$ sur une première partie correspondant à une partie systématique :

$$f: \mathbb{R}^{K} \to \mathbb{R}: \quad f(\mathbf{L}_i) = \frac{1}{K} \sum_{l=1}^{K} \frac{1}{1 + \exp(|\lambda_{i,l}|)} \quad L_{i,l} = \lambda_{i,l} \ \forall l \in \{1, \dots, K\} \qquad (5)$$

En fonction du mode plus *K* ou $P_s$ est grand, plus le test de fiabilité est précis.

Si la valeur est inférieure ou égale au seuil : $f(\lambda_i) \le \gamma_t$ ou $f(\mathbf{L}_i) \le \gamma_t$ le message est fiable. Selon l'illustration du relais figure 5 l'interrupteur B$_{i,3}$ est fermé et le message est transmis au module de décision DU.

Si la valeur est supérieure au seuil : $f(\lambda_i) > \gamma_t$ ou $f(\mathbf{L}_i) > \gamma_t$ le message n'est pas fiable. Selon l'illustration du relais figure 5 l'interrupteur B$_{i,3}$ est ouvert et le message n'est pas transmis au module de décision DU.

Sur la base de simulations, la valeur initiale du seuil peut être fixée à environ 0.01. Ce seuil est un paramètre ajustable. Il est en particulier fonction du relais et des conditions environnementales de déploiement du relais.

Le module de décision DU contrôle le fonctionnement du module ETU en fonction des résultats des tests d'intégrité et de fiabilité.

Le module ETU effectue une mise en forme 5 prenant uniquement en compte les messages estimés sans erreur et les messages estimés avec erreur et fiables. Cette mise en forme est effectuée sous une forme souple si au moins un message estimé avec erreur passe avec succès le test de fiabilité. Cette mise en forme comprend un entrelacement canal et une modulation $\mathbf{x}_r \in \mathcal{X}^N$.

Le module ETU transmet 6 un signal représentatif des messages après leur mise en forme. Selon des mécanismes connus de l'homme du métier, le relais utilise un signal de signalisation pour indiquer à la destination les messages pris en compte dans le signal représentatif.

Le rôle du module de décision DU et son impact sur le fonctionnement du module ETU est détaillé ci-après.

Si aucun message reçu n'est sans erreur et si aucun message reçu n'est fiable alors le relais reste silencieux ce qui lui évite de propager des erreurs, le module ETU n'est pas activé par le module de décision DU.

Si tous les messages reçus sont sans erreur (il n'y a pas de message pour le test de fiabilité) alors le module ETU est activé selon un mode dure par le module de décision DU.

Si au moins un message est sans erreur et si tous les messages estimés avec erreur ne sont pas fiables, alors le module ETU est activé selon un mode dure par le module de décision.

L'activation du module ETU selon un mode dure signifie que les messages sont pris en compte par le module ETU sous leur forme dure ; la mise en forme 5 porte sur les bits des messages. En ce qui concerne l'exemple illustré par la figure 5, la mise en forme effectuée par le module ETU selon un mode dure peut être exprimée sous la forme :

$\mathbf{x}_r = \Theta_{\text{hard,i}}(\mathbf{u}_i)$ si le seul message $\hat{\mathbf{u}}_i$, $i = 1$ ou $2$ est sans erreur et $\hat{\mathbf{u}}_j$ avec $j \neq i$ n'est pas fiable (et estimé avec erreur) ou
$\mathbf{x}_r = \Theta_{\text{hard,3}}(\mathbf{u}_1,\mathbf{u}_2)$ si les deux messages sont sans erreur.

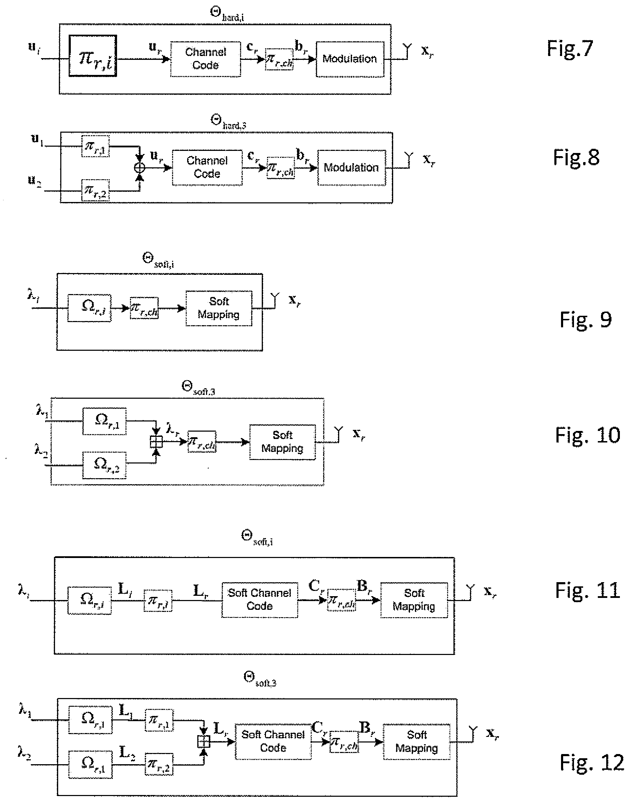

La figure 7 représente un exemple de réalisation de la mise en forme $\Theta_{\text{hard,i}}(\mathbf{u}_i)$. Cette mise en forme comprend un entrelaceur message $\pi_{r,i}$, un codeur canal, un entrelaceur canal $\pi_{r,ch}$ et un modulateur. L'entrelaceur message entrelace le message $\mathbf{u}_i = \hat{\mathbf{u}}_i$ et donne un message entrelacé $\mathbf{u}_r$. Le codeur canal génère un mot de code $\mathbf{c}_r$. L'entrelaceur canal entrelace le mot de code pour générer un mot de code entrelacé $\mathbf{b}_r$. Le modaleur génère le signal modulé $\mathbf{x}_r \in \mathcal{X}^N$ à partir du mot entrelacé $\mathbf{b}_r$.

La figure 8 représente un exemple de réalisation de la mise en forme $\Theta_{\text{hard,3}}(\mathbf{u}_1,\mathbf{u}_2)$. Cette mise en forme comprend deux entrelaceurs message $\pi_{r,1}$, $\pi_{r,2}$ distincts, un codeur canal, un entrelaceur canal $\pi_{r,ch}$ et un modulateur. Les entrelaceurs message $\pi_{r,1}$, $\pi_{r,2}$ entrelacent les bits des messages sans erreur. Les messages entrelacés $\tilde{\mathbf{u}}_i$ sont additionnés en utilisant un ou exclusif (XOR) dans le corps des binaires (binary field) pour générer le message $\mathbf{u}_r$ :

$$u_{\text{r,k}} = \tilde{u}_{1,k} \oplus \tilde{u}_{2,k} \quad \forall k = 1, \dots, K \qquad (6)$$

Le codeur canal code le message $\mathbf{u}_r$ pour donner un mot de code $\mathbf{c}_r \in F_2^{P_r}$. Le mot de code $\mathbf{c}_r$ est entrelacé par l'entrelaceur canal pour donner le mot entrelacé $\mathbf{b}_r$. Le modulateur génère le signal modulé $\mathbf{x}_r \in \mathcal{X}^N$ à partir du mot entrelacé $\mathbf{b}_r$.

Si au moins un message est reçu avec erreur et est fiable alors le module ETU est activé selon un mode souple par le module de décision DU. Dans ce cas, la mise en forme effectuée par le module ETU est l'une des suivantes :

- $\mathbf{x}_r = \Theta_{\text{soft,i}}(\lambda_1)$ si $\hat{\mathbf{u}}_i$ est (estimé avec erreur et) fiable et si $\hat{\mathbf{u}}_j$ avec $j \neq i$ est ni sans erreur ni fiable,
- $\mathbf{x}_r = \Theta_{\text{soft,3}}(\lambda_1,\lambda_2)$ soit si les deux messages $\hat{\mathbf{u}}_1$ et $\hat{\mathbf{u}}_2$ sont (estimé avec erreur et) fiables, soit si un message est (estimé avec erreur et) fiable et l'autre est sans erreur.

Il est à noter que dans ce cas les valeurs souples (LLR) des messages sans erreur ont été positionnées aux valeurs extrêmes de quantification correspondant aux valeurs zéro et un lors de la décision dure.

La figure 9 représente un exemple de réalisation de la mise en forme $\Theta_{\text{soft,i}}(\lambda_1)$. Cette mise en forme comprend un poinçonneur $\Omega_{r,i}$, un entrelaceur canal $\pi_{r,ch}$ et un modulateur souple. Le poinçonneur sélectionne certaines ($P_s'$) valeurs souples du vecteur $\lambda_i$ de LLR correspondant au message $\mathbf{u}_i$ et donne un vecteur poinçonné $\mathbf{L}_i$. L'entrelaceur entrelace le vecteur poinçonné pour générer un vecteur poinçonné entrelacé. Le modaleur souple converti le vecteur poinçonné entrelacé en un signal modulé $\mathbf{x}_r \in \mathcal{X}^N$.

La figure 10 représente un exemple de réalisation de la mise en forme $\Theta_{\text{soft,3}}(\lambda_1,\lambda_2)$. Cette mise en forme comprend deux poinçonneurs $\Omega_{r,1}$, $\Omega_{r,2}$, un codeur réseau souple, un entrelaceur canal $\pi_{r,ch}$ et un modulateur souple. Chaque poinçonneur $\Omega_{r,1}$, $\Omega_{r,2}$ sélectionne certaines ($P_s'$) valeurs souples du vecteur $\lambda_1$, $\lambda_2$ de LLR correspondant au message $\mathbf{u}_1$, $\mathbf{u}_2$ et donne un vecteur poinçonné $\mathbf{L}_1$, $\mathbf{L}_2$. Le codeur réseau souple additionne les vecteurs poinçonnés (de même longueur adaptée en fonction du nombre d'utilisations du canal alloué au relais) selon l'opération :

$$\lambda_{r,l} = L_{1,l} \boxplus L_{2,l} = \log \frac{e^{L_{1,l}} + e^{L_{2,l}}}{1 + e^{L_{1,l} + L_{2,l}}} \quad \forall l = 1, \ldots, P_s, \tag{7}$$

L'entrelaceur canal entrelace le vecteur codé $\lambda_r$ pour générer un vecteur codé entrelacé. Le modaleur souple converti le vecteur codé entrelacé en un signal modulé $\mathbf{x}_r \in \mathcal{X}^N$.

Les figures 11 et 12 illustrent d'autres exemples de mise en oeuvre des mises en forme $\Theta_{\text{soft,i}}(\lambda_1)$ et $\Theta_{\text{soft,3}}(\lambda_1,\lambda_2)$. Ces mises en forme sont avantageusement flexibles au niveau du codage au relais, c'est-à-dire que ces mises en forme permettent l'utilisation d'un codage de canal différent de celui utilisé par les sources.

L'exemple de la mise en forme $\Theta_{\text{soft,i}}(\lambda_1)$ illustré par la figure 11, comprend outre les composants de la mise en forme illustrée par la figure 9, un entrelaceur message $\pi_{r,i}$ et un codeur de canal souple. Le poinçonneur sélectionne $K$ valeurs souples du vecteur $\lambda_i$ de LLR correspondant au message $\boldsymbol{u}_i$, par exemple les $K$ valeurs correspondant à la partie systématique, pour donner un vecteur poinçonné $\mathbf{L}_i \in \mathbb{R}^K$. L'entrelaceur message $\pi_{r,i}$ entrelace le vecteur poinçonné $\mathbf{L}_i$ pour générer un vecteur poinçonné entrelacé $\mathbf{L}_r$. Le codeur de canal souple code le vecteur poinçonné entrelacé $\mathbf{L}_r$ sous la forme $\mathbf{C}_r \in \mathbb{R}^{P_r}$. L'entrelaceur de canal $\pi_{r,ch}$ entrelace le vecteur codé $\mathbf{C}_r$ pour générer un vecteur codé entrelacé $\mathbf{B}_r$. Le modaleur souple converti le vecteur codé entrelacé en un signal modulé $\mathbf{x}_r \in \mathcal{X}^N$.

L'exemple de la mise en forme $\Theta_{\text{soft,3}}(\lambda_1,\lambda_2)$ illustrée par la figure 12 comprend, outre les composants de la mise en forme illustrée par la figure 10, deux entrelaceurs message $\pi_{r,1}$, $\pi_{r,2}$ distincts et un codeur de canal souple. Chaque poinçonneur $\Omega_{r,1}$, $\Omega_{r,2}$ sélectionne $K$ valeurs souples du vecteur $\lambda_1$, $\lambda_2$ de LLR correspondant au message $\boldsymbol{u}_1$, $\boldsymbol{u}_2$, par exemple les $K$ valeurs correspondant à la partie systématique, pour donner un vecteur poinçonné $\mathbf{L}_1 \in \mathbb{R}^K$, $\mathbf{L}_2 \in \mathbb{R}^K$. Chaque entrelaceur message $\pi_{r,1}$, $\pi_{r,2}$ entrelace le vecteur poinçonné $\mathbf{L}_1$, $\mathbf{L}_2$ pour générer un vecteur poinçonné entrelacé. Le codeur réseau souple additionne les vecteurs poinçonnés entrelacés selon l'opération (1) pour générer un vecteur $\mathbf{L}_r \in \mathbb{R}^K$. Le codeur de canal souple code le vecteur $\mathbf{L}_r$ sous la forme $\mathbf{C}_r \in \mathbb{R}^{P_r}$. L'entrelaceur canal entrelace le vecteur codé $\mathbf{C}_r$ pour générer un vecteur codé entrelacé $\mathbf{B}_r$. Le modaleur souple converti le vecteur codé entrelacé en un signal modulé $\mathbf{x}_r \in \mathcal{X}^N$.

Lorsque le mode de réalisation au relais nécessite des LLR sur les bits non-systématiques des messages des sources, ce mode peut être amélioré lorsqu'un des messages est sans erreur. Le procédé régénère le vecteur de LLR à partir des bits du message. Ainsi, par exemple si $\mathbf{u}_1 = \hat{\mathbf{u}}_1$ alors le relais peut régénérer le mot de code $\mathbf{c}_1$ compte tenu qu'il connait le codage de canal utilisé par la source $\mathbf{s}_1$. Connaissant le mot de code $\mathbf{c}_1$, le procédé régénère le vecteur de LLR comme suit :

$$\lambda_{1,l} = \begin{cases} -\infty & si & c_{1,l} = 0 \\ \infty & si & c_{1,l} = 1 \end{cases} \quad \forall l = 1, \ldots, P_s \tag{8}$$

Le principe de la modulation souple est explicité ci-après.

La modulation classique $\phi\left(b_{r,l_1}, \ldots, b_{r,l_Q}\right) = x_{r,n}^{hard}$ fait correspondre bits consécutifs, prenant la valeur 0 ou 1 (ici dénotés $b_{r,l_1},\ldots,b_{r,l_Q}$) au symbole $x_{r,n}^{hard}$ appartenant à la constellation $\mathcal{X}$ ($x_{r,n}^{hard} \in \mathcal{X}$). Cette opération correspond aux boites « modulation » des figures 7, 8, 13. Il est fait l'hypothèse que la puissance de la constellation est normalisée à un. La modulation souple associée correspond aux boites « soft mapping » des figures 9, 10, 11, 12, 14, 15. En considérant les notations associées aux figures 11, 12, 15, elle consiste à prendre Q LLR consécutifs $B_{r,l_1},\ldots,B_{r,l_Q}$ relatifs à la valeur des bits $b_{r,l_1},\ldots,b_{r,l_Q}$ du symbole $x_{r,n}^{hard}$ et à trouver la fonction $f(B_{r,l_1},\ldots,B_{r,l_Q})$ qui minimise l'erreur quadratique moyenne :

$$\sigma_1^2 = \min_f \mathbb{E}\left|f(B_{r,l_1}, \dots, B_{r,l_Q}) - x_{r,n}^{hard}\right|^2 \qquad (9)$$

où $\sigma_1^2$ est la valeur minimale de l'erreur quadratique moyenne (MMSE en anglais). Ce problème d'estimation bien connu donne :

$$f(B_{r,l_1}, \dots, B_{r,l_Q}) = \mathbb{E}\left\{x_{r,n}\middle|B_{r,l_1}, \dots, B_{r,l_Q}\right\}$$

$$= \sum_{(b_{r,l_1}, \dots, b_{r,l_Q})\in\mathbb{F}_2^Q} \phi\left(b_{r,l_1}, \dots, b_{r,l_Q}\right)\prod_{i=1}^{Q}\frac{e^{b_{r,l_i}B_{r,l_i}}}{\left(1 + e^{b_{r,l_i}B_{r,l_i}}\right)} = \tilde{x}_{r,n} \qquad (10)$$

La valeur complexe résultante $\tilde{x}_{r,n}$ est la moyenne pondérée des symboles de la constellation conditionnée aux LLR de leurs bits constitutifs. Quand la constellation porte moins de deux bits (i.e. $Q \leq 2$), une alternative consiste à transmettre directement les LLR (après la normalisation en puissance) sur la composante en phase et sur la composante en quadrature. Quand Q > 2, la modulation souple proposée ci-dessus (MMSE) permet de transmettre Q LLRs pendant une seule utilisation du canal : les LLR sont compressés grâce à la modulation souple.

Ainsi, le relais transmet pendant la n[ième] utilisation de canal associée à son intervalle de transmission temporel (contenant N utilisations de canal n=1,...,N) :

$$x_{r,n} = \frac{1}{\tilde{\sigma}}\tilde{x}_{r,n} \qquad (11)$$

pour que la puissance des $x_{r,n}$ reste égale à 1.

En réception, la destination $s_i$ reçoit

$$y_{s_i,r,n} = h_{s_i,r}x_{r,n} + w_{s_i,r,n} \; \forall n = 1, \dots, N \qquad (12)$$

Par construction, il vient :

$$\tilde{x}_{r,n} = x_{r,n}^{hard} + w_1 \qquad (13)$$

où le bruit d'estimation $w_1$ de variance $\sigma_1^2 = 1 - \tilde{\sigma}^2$ avec :

$$\tilde{\sigma}^2 = \frac{1}{N}\sum_{n=1}^{N}\left|\tilde{x}_{r,n}\right|^2 \quad (\tilde{\sigma}^2 \leq 1) \qquad (14)$$

est corrélé avec $x_{r,n}$ (estimateur MMSE biaisé). Le modèle sans corrélation correspondant à l'erreur quadratique moyenne minimale sans corrélation (MMSUE en anglais) s'écrit :

$$\tilde{x}_{r,n} = \tilde{\sigma}^2 x_{r,n}^{hard} + w_2 \qquad (15)$$

où $w_2$ n'est pas corrélé avec $x_{r,n}$ et a pour variance $\tilde{\sigma}^2 (1 - \tilde{\sigma}^2)$. Finalement, le signal reçu en bande de base peut s'écrire :

$$y_{s_i,r,n} = h_{s_i,r} x_{r,n} + w_{s_i,r,n}$$

$$= h_{s_i,r}\tilde{\sigma}x_{r,n}^{hard} + h_{s_i,r}\frac{w_2}{\tilde{\sigma}} + w_{s_i,r,n} \qquad (16)$$

$$= h_{s_i,r}\tilde{\sigma}x_{r,n}^{hard} + w'_{s_i,r,n}$$

où la variance de $w'_{s_i,r,n}$ peut s'écrire :

$$\left|h_{s_i,r}\right|^2(1-\tilde{\sigma}^2) + \sigma^2 \qquad (17)$$

avec $\sigma^2$ la variance du bruit $w_{s_i,r,n}$.

Il est à noter que dans le cas où les bits $b_{r,l_1},...,b_{r,l_Q}$ sont connus (ou de façon équivalente les LLR $B_{r,l_1},...,B_{r,l_Q}$ prennent les valeurs plus ou moins l'infini), il vient $\tilde{\sigma}^2 = 1$ c'est-à-dire $\phi\left(b_{r,l_1},...,b_{r,l_Q}\right) = x_{r,n} = x_{r,n}^{hard}$.

Une alternative consiste à quantifier $x_{r,n}$ en un nombre déterminé de bits. Ces bits sont alors transmis par le relais en utilisant une technique classique.

La destination doit connaître la puissance $\tilde{\sigma}^2$. Cette information peut être transmise dans un signal de contrôle entre le relais et la destination. De manière alternative, la destination peut effectuer une détection en aveugle sous condition de connaître l'état du canal et la puissance de bruit en réception.

Le système considéré peut comprendre plusieurs relais i.e. $L \geq 2$.

Un premier mode de réalisation d'un relais adapté à un tel système consiste à conserver le module ETU tel que décrit précédemment avec la contrainte que les entrelaceurs message $\pi_{r,i}$ soient différents entre les relais. Lorsque le relais reçoit plus de deux messages simultanément, le codeur réseau consiste en un ou exclusif (XOR) sous forme dure ou souple des messages sélectionnés par le module de décision DU.

Un deuxième mode de réalisation d'un relais adapté à un tel système consiste à optimiser le codage réseau pour atteindre une diversité pleine. Dans ce cas, le changement principal de structure du relais par rapport à ce qui a été précédemment décrit consiste à remplacer le codage de réseau binaire (XOR) par un codage de réseau plus adapté et d'ajouter un entrelaceur réseau $\pi_{r,net}$ entre le codage réseau et le codage de canal. Le codage de réseau adapté doit garantir le critère de diversité pleine (par exemple un codage de réseau dans un corps de Galois d'ordre supérieur à deux).

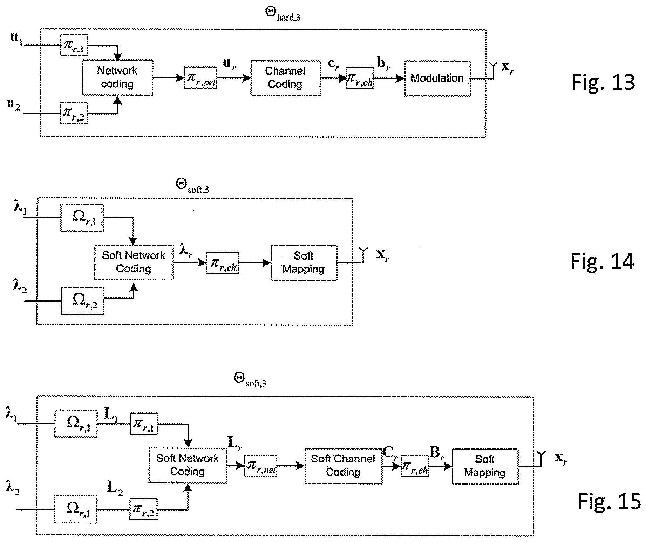

La figure 13 représente un exemple de réalisation de la mise en forme $\Theta_{hard,3}(\mathbf{u}_1,\mathbf{u}_2)$ effectuée par le module ETU lorsque $L \geq 2$. En comparaison du mode de réalisation illustré par la figure 8, le codage de réseau binaire (XOR) est remplacé par un codage de réseau et la mise en forme comporte un entrelaceur réseau $\pi_{r,net}$ entre le codage réseau et le codage de canal.

Les figures 14 et 15 représentent deux exemples de réalisation de la mise en forme $\Theta_{soft,3}(\lambda_1,\lambda_2)$ effectuée par le module ETU lorsque $L \geq 2$. Le mode de réalisation de la figure 14 est comparable à celui de la figure 10. Le mode de réalisation de la figure 15 est à comparer avec celui de la figure 12. En comparaison du mode de la figure 12, le mode de la figure 15 comprend en outre un entrelaceur réseau $\pi_{r,net}$ entre le codage réseau souple et le codage de canal souple.

**Annexe**

**Grandeurs algébriques**

1. **LLR**

Le LLR (« Log Likelihood Ratio ») représente le logarithme du rapport de vraisemblance ou rapport de probabilités relatif à deux symboles.

Dans le cas binaire, un bit u peut valoir 1 ou 0. Un tel rapport est donné par un scalaire :

$$LLR = \log\left(\frac{P(u = 1)}{P(u = 0)}\right)$$

et définit de manière unique la décision dure sur le bit u de par son signe.

## 2. LAPPR

Le LAPPR (« Log A Posteriori Probability Ratio ») désigne une forme de LLR « conditionnel » à une information parallèle (« side information ») fournie typiquement par une séquence reçue.

Dans le cas binaire, le LAPPR est défini par :

$$LAPPR = \log\left(\frac{P(u = 1\,|y)}{P(u = 0|y)}\right)$$

[1] demande de brevet WO 2013093359 «Procédé de transmission d'un signal numérique pour un système MS-MARC semi-orthogonal, produit programme et dispositif relais correspondants ».

[2] demande de brevet WO 2013093361 "« Procédé de transmission d'un signal numérique pour un système MS-MARC non-orthogonal, produit programme et dispositif relais correspondants »

[3] demande de brevet WO 2012022905 « Procédé et dispositif de relayage dans un réseau de communication »

[4] « Full diversity distributed coding for the multiple access half-duplex relay channel », Network coding (NETCOD), 2011 International symposium on, IEEE, 25 juillet 2011 (2011-07-25), pages 1-6, XP031928315

## Revendications

1. Procédé (1) de relayage de messages par un relais destiné à un système de télécommunication à M sources $(s,s_1,...,s_M)$, L relais $(r,r_1,...,r_L)$ et D destinations $(d,d_1,...,d_D)$, $M \geq 1$, $L \geq 1$, $D \geq 1$, les transmissions entre les sources, les relais et les destinations se font via un canal de transmission, selon lequel le procédé comprend :

   - un décodage (2) souple de mots de code émis par au moins une source pendant un premier nombre donné (N) d'utilisations du canal pour obtenir des vecteurs de valeurs souples représentant les messages décodés,
   - une détection (3) d'erreur sur les vecteurs pour pouvoir séparer les messages estimés sans erreur des messages estimés avec erreur,

   **caractérisé en ce qu'**il comprend en outre :

   - un test de fiabilité (4) portant uniquement sur les vecteurs des messages estimés avec erreur pour pouvoir séparer les messages fiables des messages non fiables,
   - une mise en forme (5) comprenant un entrelacement canal ($\pi_{r,ch}$) et une modulation prenant uniquement en compte les messages estimés sans erreur et les messages estimés avec erreur et fiables, cette mise en forme portant sur les valeurs souples des messages si au moins un message estimé avec erreur passe avec succès le test de fiabilité,
   - une émission (6) pendant un deuxième nombre donné d'utilisations du canal d'un signal représentatif des messages pris en compte par la mise en forme.

2. Procédé (1) selon la revendication 1, dans lequel le test de fiabilité consiste à comparer une estimation d'une probabilité d'erreur d'un message effectuée à partir du vecteur des valeurs souples LLR de ce message à une valeur seuil.

3. Procédé (1) selon la revendication 2, dans lequel l'estimation de probabilité d'erreur est effectuée à partir de toutes les valeurs souples du vecteur.

4. Procédé (1) selon la revendication 2, dans lequel les mots de code reçus par le relais ont été émis après un codage systématique par les sources et dans lequel l'estimation de probabilité d'erreur est effectuée uniquement à partir des valeurs souples associées à une partie systématique du message.

5. Procédé (1) selon la revendication 1, dans lequel la mise en forme (5) comprend en outre un codage de réseau binaire et un codage canal, le codage de réseau binaire consistant à additionner au moyen d'un ou exclusif dans le domaine binaire les messages estimés sans erreur puis entrelacés.

6. Procédé (1) selon la revendication 1, dans lequel si aucun message n'est détecté sans erreur et si au moins un message détecté avec erreur est fiable alors la modulation est de type souple.

**7.** Procédé (1) selon la revendication 6, dans lequel la modulation de type souple mappe Q>2 valeurs souples des bits constitutifs du message fiable sur un symbole complexe qui est une valeur moyenne pondérée des points de la constellation conditionnée à la valeur des Q valeurs souples.

**8.** Procédé (1) selon la revendication 6, dans lequel l'entrelacement canal est effectué uniquement sur une sélection par poinçonnage des valeurs souples pour ajuster le rendement de codage et de modulation à la longueur du deuxième nombre donné d'utilisations du canal.

**9.** Procédé selon la revendication 1, dans lequel si aucun message n'est détecté sans erreur et si tous les messages détectés avec erreur sont fiables alors la mise en forme qui porte sur les valeurs souples des messages comprend un codage réseau souple des valeurs souples avant l'entrelacement canal et comprend une modulation souple.

**10.** Procédé selon la revendication 9, dans lequel le codage réseau souple est une addition effectuée uniquement sur une sélection des valeurs souples pour ajuster le rendement de codage et de modulation à la longueur du deuxième nombre donné d'utilisations du canal.

**11.** Procédé selon la revendication 1, dans lequel si au moins un message est détecté sans erreur et si au moins un message est détecté avec erreur et est fiable alors des valeurs souples positionnées aux valeurs extrêmes de quantification correspondant aux valeurs zéro et un sont associés aux messages détectés sans erreur et la mise en forme qui porte sur les valeurs souples des messages comprend un codage réseau souple des valeurs souples des messages avant l'entrelacement canal et comprend une modulation souple.

**12.** Relais (r) destiné à un système de télécommunication à M sources ($s,s_1,...,s_M$), L relais ($r,r_1,...,r_L$) et D destinations ($d,d_1,...,d_D$), $M \geq 1$, $L \geq 1$, $D \geq 1$ pour la mise en oeuvre d'un procédé de relayage selon l'une quelconque des revendications 1 à 11, comprenant :

- un décodeur souple (Dec) de mots de code émis par au moins une source pendant un premier nombre donné (N) d'utilisations du canal pour obtenir des vecteurs de valeurs souples représentant les messages décodés,
- un détecteur d'erreur (CRC) sur les vecteurs pour pouvoir séparer les messages estimés sans erreur des messages estimés avec erreur,

**caractérisé en ce qu'**il comprend en outre :

- un moyen de test de fiabilité portant uniquement sur les vecteurs des messages estimés avec erreur pour pouvoir séparer les messages fiables des messages non fiables,
- un moyen (ETU) de mise en forme comprenant :

- un entrelaceur canal ($\pi_{r,ch}$) et un modulateur portant uniquement sur les messages estimés sans erreur et sur les messages estimés avec erreur et fiables, cette mise en forme portant sur les valeurs souples des messages si au moins un message estimé avec erreur passe avec succès le test de fiabilité,
- un émetteur pour émettre pendant un deuxième nombre donné d'utilisations du canal un signal représentatif des messages pris en compte par le moyen de mise en forme.

**13.** Système à M sources ($s,s_1,...,s_M$), L relais ($r,r_1,...,r_L$) et D destinations ($d,d_1,...,d_D$), $M \geq 1$, $L \geq 1$, $D \geq 1$, dans lequel les relais sont selon la revendication 12 et sont tels que les entrelaceurs réseau sont différents entre les relais.

**Patentansprüche**

**1.** Verfahren (1) zum Weiterleiten von Nachrichten durch eine Zwischenstation, die für ein Telekommunikationssystem mit M Quellen (s, $s_1$, ..., $s_M$), L Zwischenstationen (r, $r_1$, ..., $r_L$) und D Zielen (d, $d_1$, ..., $d_D$), $M \geq 1$, $L \geq 1$, $D \geq 1$, bestimmt ist, wobei die Übertragungen zwischen den Quellen, den Zwischenstationen und den Zielen über einen Übertragungskanal erfolgen, gemäß dem das Verfahren Folgendes umfasst:

- eine weiche Decodierung (2) von Codeworten, die von mindestens einer Quelle ausgesendet werden, während einer ersten gegebenen Anzahl (N) von Verwendungen des Kanals, um Vektoren von weichen Werten zu erhalten, die die decodierten Nachrichten darstellen,
- eine Fehlerdetektion (3) an den Vektoren, um die ohne Fehler abgeschätzten Nachrichten von den mit Fehler abgeschätzten Nachrichten trennen zu können,

**dadurch gekennzeichnet, dass** es außerdem Folgendes umfasst:

- einen Zuverlässigkeitstest (4), der nur die Vektoren der mit Fehler abgeschätzten Nachrichten betrifft, um die zuverlässigen Nachrichten von den nicht zuverlässigen Nachrichten trennen zu können,
- eine Formung (5) mit einer Kanalverschachtelung ($\pi_{r,ch}$) und einer Modulation nur unter Berücksichtigung der ohne Fehler abgeschätzten Nachrichten und der mit Fehler abgeschätzten und zuverlässigen Nachrichten, wobei diese Formung die weichen Werte der Nachrichten betrifft, wenn mindestens eine mit Fehler abgeschätzte Nachricht den Zuverlässigkeitstest mit Erfolg durchläuft,
- eine Sendung (6) eines Signals während einer zweiten gegebenen Anzahl von Verwendungen des Kanals, das Nachrichten darstellt, die durch die Formung berücksichtigt werden.

2. Verfahren (1) nach Anspruch 1, bei dem der Zuverlässigkeitatest darin besteht, eine Abschätzung einer Fehlerwahrscheinlichkeit einer Nachricht, die anhand des Vektors der weichen Werte LLR dieser Nachricht durchgeführt wird, mit einem Schwellenwert zu vergleichen.

3. Verfahren (1) nach Anspruch 2, bei dem die Abschätzung der Fehlerwahrscheinlichkeit anhand von allen weichen Werten des Vektors durchgeführt wird.

4. Verfahren (1) nach Anspruch 2, bei dem die Codeworte, die von der Zwischenstation empfangen werden, nach einer systematischen Codierung durch die Quellen ausgesendet wurden, und bei dem die Abschätzung der Fehlerwahrscheinlichkeit nur anhand der weichen Werte durchgeführt wird, die einem systematischen Teil der Nachricht zugeordnet sind.

5. Verfahren (1) nach Anspruch 1, bei dem die Formung (5) außerdem eine binäre Netzcodierung und eine Kanalcodierung umfasst, wobei die binäre Netzcodierung darin besteht, die ohne Fehler abgeschätzten, dann verschachtelten Nachrichten mittels eines binären Bereichs oder ausschließlich in diesem zu addieren.

6. Verfahren (1) nach Anspruch 1, bei dem, wenn keine Nachricht ohne Fehler detektiert wird und wenn mindestens eine mit Fehler detektierte Nachricht zuverlässig ist, dann die Modulation vom weichen Typ ist.

7. Verfahren (1) nach Anspruch 6, bei dem die Modulation vom weichen Typ Q>2 weiche Werte der Bits, die die zuverlässige Nachricht bilden, auf ein komplexes Symbol abbildet, das ein gewichteter Mittelwert der Punkte der Konstellation ist, die an den Wert der Q weichen Werte geknüpft ist.

8. Verfahren (1) nach Anspruch 6, bei dem die Kanalverschachtelung nur an einer Auswahl der weichen Werte durch Stempeln durchgeführt wird, um den Wirkungsgrad der Codierung und der Modulation auf die Länge der zweiten gegebenen Anzahl von Verwendungen des Kanals einzustellen.

9. Verfahren nach Anspruch 1, bei dem, wenn keine Nachricht ohne Fehler detektiert wird und wenn alle mit Fehler detektierten Nachrichten zuverlässig sind, dann die Formung, die die weichen Werte der Nachrichten betrifft, eine weiche Netzcodierung der weichen Werte vor der Kanalverschachtelung umfasst und eine weiche Modulation umfasst.

10. Verfahren nach Anspruch 9, bei dem die weiche Netzcodierung eine Addition ist, die nur an einer Auswahl der weichen Werte durchgeführt wird, um den Wirkungsgrad der Codierung und der Modulation auf die Länge der zweiten gegebenen Anzahl von Verwendungen des Kanals einzustellen.

11. Verfahren nach Anspruch 1, bei dem, wenn mindestens eine Nachricht ohne Fehler detektiert wird und wenn mindestens eine Nachricht mit Fehler detektiert wird und zuverlässig ist, dann weiche Werte, die an den Extremwerten der Quantifizierung positioniert sind, die den Werten null und eins entsprechen, den ohne Fehler detektierten Nachrichten zugeordnet werden, und die Formung, die die weichen Werte der Nachrichten betrifft, eine weiche Netzcodierung der weichen Werte der Nachrichten vor der Kanalverschachtelung umfasst und eine weiche Modulation umfasst.

12. Zwischenstation (r), die für ein Telekommunikationssystem mit M Quellen (s, $s_1$, ..., $s_M$), L Zwischenstationen (r, $r_1$, ..., $r_L$) und D Zielen (d, $d_1$, ..., $d_D$), M ≥ 1, L ≥ 1, D ≥ 1, bestimmt ist, für die Ausführung eines Verfahrens zur Weiterleitung nach einem der Ansprüche 1 bis 11, die Folgendes umfasst:

- einen weichen Decodierer (Dec) von Codeworten, die durch mindestens eine Quelle ausgesendet werden, während einer ersten gegebenen Anzahl (N) von Verwendungen des Kanals, um Vektoren von weichen Werten zu erhalten, die die decodierten Nachrichten darstellen,
- einen Fehlerdetektor (CRC) an den Vektoren, um die ohne Fehler abgeschätzten Nachrichten von den mit Fehler abgeschätzten Nachrichten trennen zu können,

**dadurch gekennzeichnet, dass** sie außerdem Folgendes umfasst:

- ein Mittel für einen Zuverlässigkeitstest, der nur die Vektoren der mit Fehler abgeschätzten Nachrichten betrifft, um die zuverlässigen Nachrichten von den nicht zuverlässigen Nachrichten trennen zu können,
- ein Mittel (ETU) zur Formung, das Folgendes umfasst:

- einen Kanalversehachteler ($\pi_{r,ch}$) und einen Modulator, die nur die ohne Fehler abgeschätzten Nachrichten und die mit Fehler abgeschätzten und zuverlässigen Nachrichten betreffen, wobei diese Formung die weichen Werte der Nachrichten betrifft, wenn mindestens eine mit Fehler abgeschätzte Nachricht den Zuverlässigkeitstest mit Erfolg durchläuft,
- einen Sender zum Senden eines Signals während einer zweiten gegebenen Anzahl von Verwendungen des Kanals, das Nachrichten darstellt, die durch das Formungsmittel berücksichtigt werden.

**13.** System mit M Quellen (s, $s_1$, ..., $s_M$), L Zwischenstationen (r, $r_1$, ..., $r_L$) und D Zielen (d, $d_1$, ..., $d_D$), M ≥ 1, L ≥ 1, D ≥ 1, in dem die Zwischenstationen gemäß Anspruch 12 sind und derart sind, dass die Netzverschachteler zwischen den Zwischenstationen unterschiedlich sind.

**Claims**

**1.** A relaying method (1) for relaying messages by a relay for use in a telecommunications system having M sources $(s, s_1, ..., s_M)$, L relays $(r, r_1, ..., r_L)$, and D destinations $(d, d_1, ..., d_D)$, M≥1, L≥1, D≥1, the transmissions between the sources, the relays, and the destinations taking place via a transmission channel, wherein the method comprises:

• soft decoding (2) of code words transmitted by at least one source during a given first number (N) of the channel uses in order to obtain vectors of soft values representing the decoded messages;
• detecting errors (3) in the vectors in order to be able to separate messages estimated without error from messages estimated with error;

the method being **characterized in that** it further comprises:

• reliability testing (4) relating solely to the vectors of messages estimated with error in order to be able to separate messages that are reliable from messages that are not reliable;
• shaping (5), comprising channel interleaving ($\pi_{c,ch}$) and modulation taking account only of the messages estimated without error and of those messages estimated with error that are reliable, this shaping of the messages being performed in soft form if at least one message estimated with error successfully passes the reliability testing; and
• during a second given number of channel uses, transmitting (6) a signal that is representative of the messages taken into account by the shaping.

**2.** A method (1) according to claim 1, wherein the reliability testing consists in comparing an estimate of a probability of error of a message based on the vector of soft values LLR of said message with a threshold value.

**3.** A method (1) according to claim 2, wherein the probability of error is estimated over all of the soft values of the vector.

**4.** A method (1) according to claim 2, wherein the code words received by the relay are transmitted after systematic coding by the sources, and wherein the probability of error is estimated solely on the soft values associated with a systematic portion of the message.

**5.** A method (1) according to claim 1, wherein the shaping (5) further comprises binary network coding and channel coding, the binary network coding consisting in using an exclusive or in the binary field to add together the messages estimated without error and then interleaved.

6. A method (1) according to claim 1, wherein if no message is detected without error, and if at least one message detected with error is reliable, then the modulation is of the soft type.

7. A method (1) according to claim 6, wherein the soft type modulation maps Q>2 soft values of bits constituting the reliable message onto a complex symbol that is a weighted mean value of the points of the constellation conditioned to the value of the Q soft values.

8. A method (1) according to claim 6, wherein the channel interleaving is performed solely on a selection, by puncturing of soft values in order to adjust the coding and modulation rate to the length of the second given number of channel uses.

9. A method according to claim 1, wherein, if no message is detected without error, and if all of the messages detected with error are reliable, then the shaping which is performed on the soft values of the messages comprises soft network coding the soft values before the channel interleaving and comprises soft modulation.

10. A method according to claim 9, wherein the soft network coding is addition performed solely on a selection of the soft values in order to adjust the coding and modulation rate to the length of the second given number of channel uses.

11. A method according to claim 1, wherein if at least one message is detected without error, and if at least one message is detected with error and is reliable, then soft values positioned at extreme quantization values corresponding to the values zero and one are associated with the messages detected without error, and the shaping in soft form of the messages comprises soft network coding of the soft values of the messages prior to channel interleaving, and comprises soft modulation.

12. A relay ($r$) for a telecommunications system having M sources ($s,s_1,...,s_M$), L relays ($r,r_1...,r_L$), and D destinations ($d,d_1,...,d_D$), $M \geq 1$, $L \geq 1$, $D \geq 1$, for performing a relaying method according to any one of claims 1 to 11, and comprising:

   • a soft decoder (Dec) of code words transmitted by at least one source during a given first number (N) of the channel uses in order to obtain vectors of soft values representing the decoded messages;
   • an error detector (CRC) for detecting errors in the vectors in order to be able to separate messages estimated without error from messages estimated with error;

   the relay being **characterized in that** it further comprises:

   • reliability testing means relating solely to the vectors of messages estimated with error in order to be able to separate messages that are reliable from messages that are not reliable;
   • a shaper unit (ETU) comprising:

      . a channel interleaver ($\pi_{r,ch}$) and a modulator taking account only of the messages estimated without error and of those messages estimated with error that are reliable, this shaping being performed on the soft values of the messages if at least one message estimated with error successfully passes the reliability testing; and

   • a transmitter for transmitting during a second given number of channel uses a signal representative of the messages taken into account by the shaper unit.

13. A system having M sources ($s,s_1,...,s_M$), L relays ($r,r_1...,r_L$), and D destinations ($d,d_1,...,d_D$), $M \geq 1$, $L \geq 1$, $D \geq 1$, wherein the relays are according to claim 12 and are such that the network interleavers differ between the relays.

Fig.1

Fig.2

Fig.3

Fig.4

Fig.5

Fig.6

$\Theta_{hard,i}$

Fig.7

$\Theta_{hard,3}$

Fig.8

$\Theta_{soft,i}$

Fig. 9

$\Theta_{soft,3}$

Fig. 10

$\Theta_{soft,i}$

Fig. 11

$\Theta_{soft,3}$

Fig. 12

$\Theta_{hard,3}$

$\mathbf{u}_1$ — $\pi_{r,1}$ — Network coding — $\pi_{r,net}$ $\mathbf{u}_r$ — Channel Coding $\mathbf{c}_r$ — $\pi_{r,ch}$ $\mathbf{b}_r$ — Modulation — Y $\mathbf{x}_r$

$\mathbf{u}_2$ — $\pi_{r,2}$

Fig. 13

$\Theta_{soft,3}$

$\lambda_1$ — $\Omega_{r,1}$ — Soft Network Coding $\lambda_r$ — $\pi_{r,ch}$ — Soft Mapping — Y $\mathbf{x}_r$

$\lambda_2$ — $\Omega_{r,2}$

Fig. 14

$\Theta_{soft,3}$

$\lambda_1$ — $\Omega_{r,1}$ $\mathbf{L}_1$ — $\pi_{r,1}$ — Soft Network Coding $\mathbf{L}_r$ — $\pi_{r,net}$ — Soft Channel Coding $\mathbf{C}_r$ $\mathbf{B}_r$ — $\pi_{r,ch}$ — Soft Mapping — Y $\mathbf{x}_r$

$\lambda_2$ — $\Omega_{r,1}$ $\mathbf{L}_2$ — $\pi_{r,2}$

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013093359 A
- WO 2013093361 A
- WO 2012022905 A

**Littérature non-brevet citée dans la description**

- Full diversity distributed coding for the multiple access half-duplex relay channel. Network coding (NETCOD), 2011 International symposium on. IEEE, 25 Juillet 2011, 1-6